# EUROPEAN PATENT SPECIFICATION

(11) **EP 3 189 463 B1**
(45) Date of publication and mention of the grant of the patent: **19.08.2020**
(21) Application number: 15745434.9
(22) Date of filing: 27.07.2015
(51) Int. Cl.: G06F 21/62

(54) **PRIVACY BY DESIGN DATABASE AND METHODS OPERATING THEREON**
DATENSCHUTZ DURCH DESIGNDATENBANK UND VERFAHREN ZUM BETRIEB DAVON
CONFIDENTIALITÉ CONFÉRÉE PAR UNE CONCEPTION DE BASE DE DONNÉES ET PROCÉDÉS D'EXPLOITATION ASSOCIÉS

(30) Priority: 29.07.2014 US 201462030242 P
(43) Date of publication of application: 12.07.2017
(73) Proprietor: Aztrix NV, 1180 Ukkel (BE)
(72) Inventor: RIBBENS, Karel, B-1180 Ukkel (BE); ANAGNOSTAKIS, Christos, B-1180 Ukkel (BE)
(74) Representative: LC Patents
(86) International application number: PCT/EP2015/067165
(87) International publication number: WO 2016/016192

(56) References cited:
- WO-A2-02/48865
- US-A1- 2003 014 654
- US-A1- 2003 097 485

## Description

### Field of the invention

The invention relates to data bases for storing and handling data of individuals and organizations, architecture ((graphical) user interfaces, engines) of and methods for operating such databases, (graphical) interfaces suited for use of such databases and methods and underlying technology and related software.

### Background of the invention

An individual has individual information such as (contact) data (address information, mobile number(s), email address(es), ...). An individual his or her individual information may comprise of many different properties/values/features. The wish to share those properties may depend from property to property and also from the class of persons/organization with whom such property may be shared.

Database get filled with information either by entry of information by the related individual, and/or by entry of information of an individual by another, and/or by (massive) entry of information from other databases. This uncoordinated entry may lead to consistency issues and/or inefficient entry if no optimal use of already available information is made. Moreover many of the features (like country, city or street name) are not unique to a single individual/organizations (typically it is the set of features which are unique) while other databases with high quality information about those features exist.

Moreover handling of databases with individual information becomes more and more regulated from the perspective of privacy via privacy law. WO 02/48865 A2 discloses a context manager which controls and audits the flow of private data between multiple applications which run in different contexts

### Aim of the invention

The invention provides technological solutions curing the above mentioned problems, more in particular a database structure or system design (subsequently implemented in software) and related use methods, build on a well selected underlying concept, the use thereof with a dedicated application.

### Summary of the invention

In a first aspect of the invention a database for storing and handling data of individuals is provided wherein an individual can choose for each property (or group of properties) to assign or relate an attribute/context (such as professional, personal, .....) and can further choose (at the time of entry and/or upon request) based on such attribute to make this property accessible for, everybody (public), a predefined class(es) of others (selective public) or even to no one (private).

In a second aspect of the invention a database for storing and handling of data of individuals is provided, wherein use of high quality information (meta-data) from other databases for non-unique and even unique features might be used.

In a third aspect of the invention various methods for (smart) entry/adding of information to a database for storing and handling information of individuals (such as but not limited to the databases of the first and/or second aspect of the invention) in a manner compliant with privacy law by establishing a suitable sharing (privacy by design) and also communication flow between the parties involved (the individual whose data is entered, the individual entering which may be the same or another individual, the organizations using and/or willing to share information for the database).

The invention is defined in the claims 1-15.

### Brief description of the drawings

The accompanying drawings are used to illustrate presently preferred non-limiting exemplary embodiments of the present invention. The above and other advantages of the features and objects of the invention will become more apparent and the invention will be better understood from the following detailed description when read in conjunction with the accompanying drawings.
Figure 1 shows the underlying concept of the invention and more in particular the graph (node, relationship) representation thereof.
Figure 2 shows an exemplary embodiment of Figure 1.
Figure 3 shows a use of the concept of Figure 1 in terms of individuals and contacts.
Figure 4 shows the application of the concept of Figure 3.
Figure 5 shows an exemplary embodiment of the application of Figure 4.
Figure 6 illustrates that the concept can be adapted for use of data values residing in another system.
Figures 7-12 demonstrate the privacy policy implementation in the graph based embodiment of the invented database.

### Detailed description of the invention

The application incorporates by reference U.S. provisional US 62/030242 application in its entirety.

The invention relates to databases for storing, handling, managing data/information of an individual, such as address information, whereby such database is suitable for on-line access. The database is adapted for use by individuals and organizations such as companies. Various applications and/or individual-organization relationships have an underlying application and/or relationship specific database. The invention relates to a generic database, usable for a plurality of application and/or relationships, and able to tune for each of said applications and relationships the required necessities such as the information to be shared (made accessible) or not. The invention relates to technology supportive for such databases, such as a graph based approach. With database is meant any computer system or systems with storage means (computer memories of various kinds) and related technology and software for handling any of the data stored thereon.

The use of a kind of virtually (the hardware implementation is unrelated thereto) central database linking to various applications leads to a dynamic context wherein the data is life/active/dynamic meaning if changed it is visible everywhere where the related user wanted it to be visible and/or changed. The use of such central database is supported by various possible ways of entry of information either in the excepted way by the data owner him or herself but also by a scheme of inviting or by importing or by making suggestions or requesting. The use of such central database requires trust in the system and therefore methods to clean the data by use of trusted databases and also ensuring privacy by design by only providing access to certain data features in full accordance with the policy that a user sets is foreseen. In essence the user remains owner of his data and controls the data fields governing the access and that user get supported in setting such data fields for instance when receiving requests and/or request confirmations.

In essence the invention provides concepts and methods overcoming the problems of having lack of context and/or having lack of control/verification possibilities when only considering data values on their own but instead understanding that the relationships therein between are defining one or more contexts which can be used to identify/search/find a person, create suggestion possibilities, define control/verification (either implicit or explicit) and sharing possibilities.

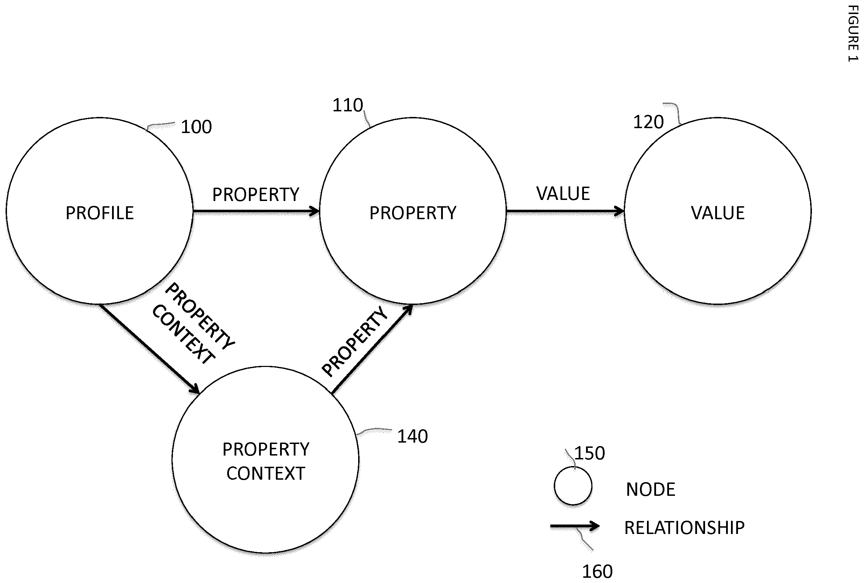

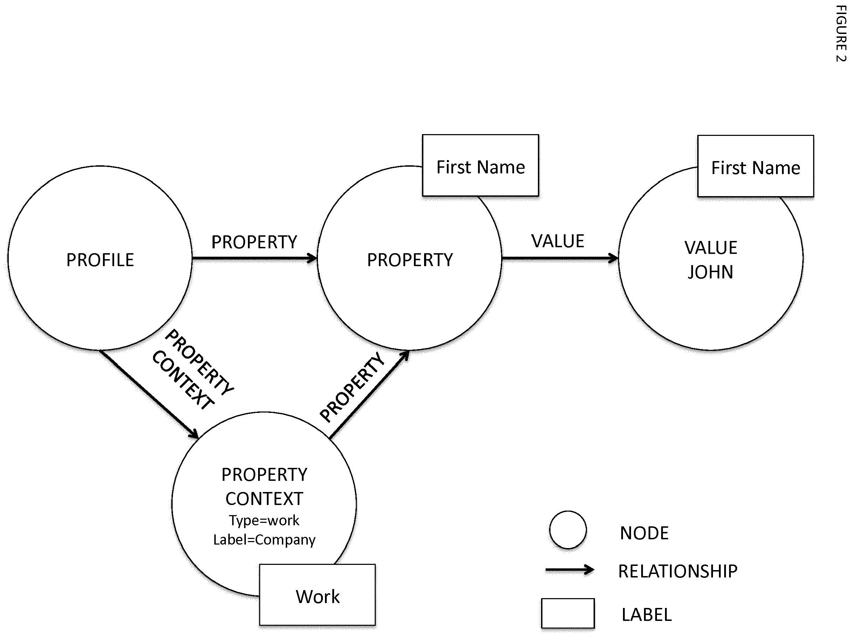

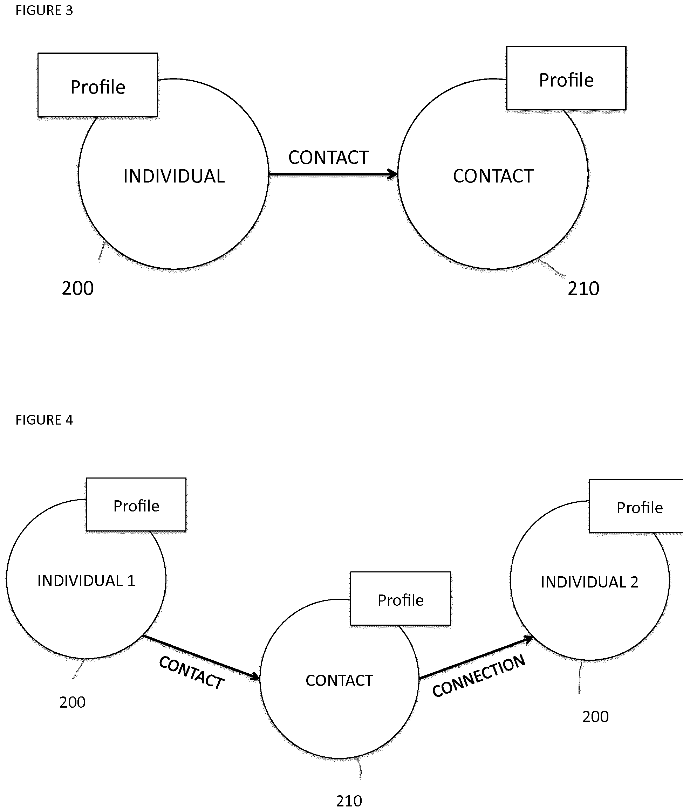

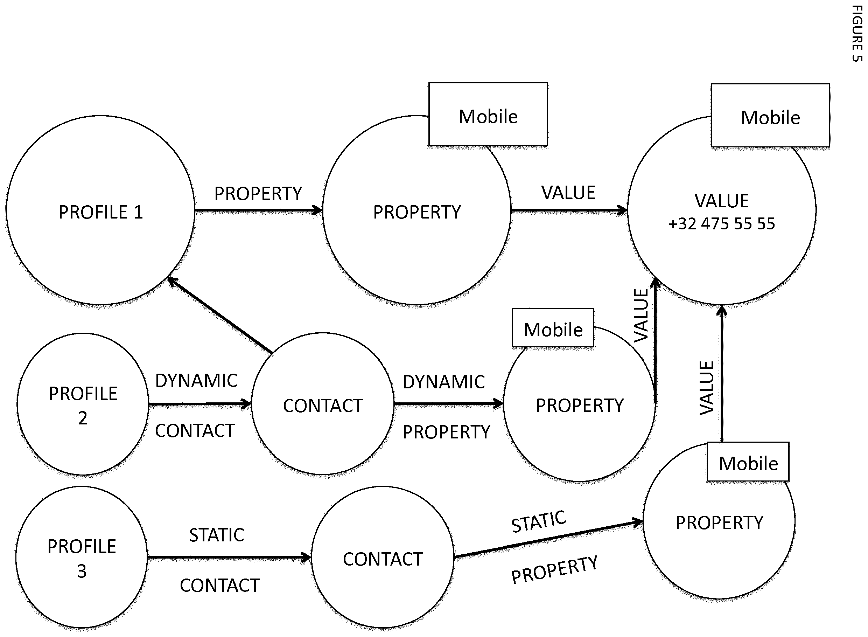

While the invention provides lots of flexibility to the user to define this profile (100) (defined as a selection of properties (110) as shown in Figure 1) in an embodiment of the invention predefined templates thereof are made available for classes of users. In an embodiment of the invention users can define their preferred/custom templates. For each property (or group of properties) an attribute/property context (140) (such as professional, personal, .....) is assigned . Properties can get a value (120). It is a contribution of the invention to emphasize the difference to be made between the property of the user (individual, organization) who's data is to be stored and the value assigned thereto. Figure 1 shows the underlying concept of splitting profile, property and value and more in particular the graph (node (150), relationship (160)) representation thereof supporting the invented database operations. Figure 2 shows an example wherein as property the first name of a person is chosen while a property context the working environment of that person, hence one might label the property, property context and the possible values by the type of info expected. Figure 3 now demonstrates the use of these above explained concept in that an "individual" is a profile, with properties organized in property contexts as registered on the database or database networks as the case might be. A "contact" is a static profile of another party, with properties organized in property contexts that you can also have in address book, related to the target database. Note again the node/relationship approach. As shown in Figure 4 a link between individuals is not made directly but via the contact node. Indeed "Individual 1" has a static "contact" that represents "Individual 2" and can connect to "Individual 2" through this contact. Upon connection, this contact, can become a dynamic representation of the connected "Individual 2", and its properties, within the appropriate context(s). When disconnected, shared properties become static again in the "contact". The basic philosophy of the database is to profit from the invented "stored-once" principle as demonstrated in Figure 5. A "profile" can have properties and in certain cases the possibility to verify them. Upon verification ownership can be claimed of this property. Based on this verified property we can start making matches and suggestions, always based on the consent & privacy settings of the users. Based on different verification methods, the design of the database and taking into account the number of shared properties a degree of reliability is deduced for a given profile.

It is worth noting at this stage that the system provides a granularity of defining a privacy policy on a per feature basis as the database is adapted in that for at least a part of said data fields, either individually or in group, at least one further second data field is provided wherein the individual or an organization can select (or assign or relate or choose) one or more attributes defining the by the individual or organization required communication method for determining the accessibility or not (if any) for (a predefined classes of) third parties. This is bilaterally possible say a opting in or an opting out procedure.

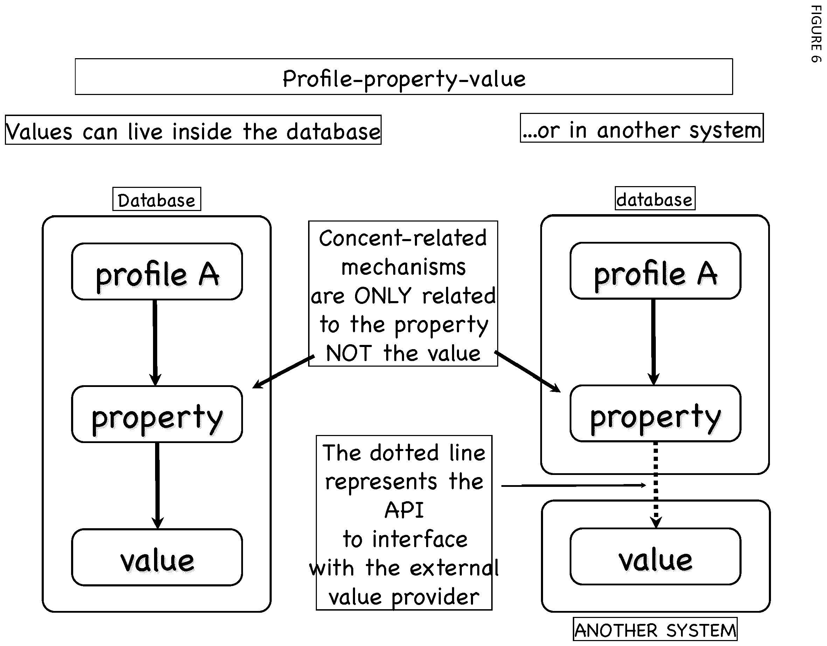

It is also to be observed that in an embodiment of the provided database (see shown in the right part of Figure 6) the data values can be part of an another system, external to the database, in particular the use of a node for a profile pointing to a feature or property which can then further point to a value, which can be outside the database itself enables this. Alternatively said the database is for storing a plurality of individual or an organization information, the database comprising for each of such individual or an organization a plurality of first data fields, each for storing or a feature of such individual or organization (of which a part define the contact information thereof) includes databases adapted in such way that the actual value stored is by reference only (by use of a suitable interface).

Note that the concept of centralizing enables checking by many users and therefore the amount of links actually represent a measure or metric of reliability of the underlying data. In an embodiment of the invention such measure is shown in the interface showing the data and its reliability. Moreover the invention provides also methods to further increase the reliability of the underlying data by making suggestions to users in further increase the trust in their data e.g. by identifying to many isolated properties or circular relationships.

In an embodiment of the invention a further selection of a suitable database structure is put forward. Indeed as the database is intended for use by many users and further that many users preferably have each many data fields or properties and since as indicated above many methods operate on the database and require a search on the database, special considerations are preferably made.

Many database concept exist (e.g. SQL) but in accordance with the present embodiment of the invention a graph database is elected as preferred concept. Indeed the underlying requirements of the invention in that verified (by design) data is aimed at, leads to a use of a data model, wherein a difference is made between the property of the user (individual, organization) who's data is to be stored and the value assigned thereto. In essence a structure relating user to properties and a property to a value is elected, whereby user, property and value are a separate node in a graph and the relationship is then represented by the bridges between the nodes. For such data model graph based databases and related search methods are most suitable, especially as they also allow searching along the bridges/the relationships. This embodiment of the invention hence provides a fundamental understanding of the true required nature of the data model and related database and (whether uni- or bidirectional along the edges of the graph) search methods to be used, in that the named property must be decomposed or separated from its value. Instead of representing the data space as nodes representing people or organizations and arcs/bridges or relations therein between, a further decomposition is made, representing each of those people or organizations themselves as a group of nodes, representing their properties and further relating these properties to stand-alone values. In this way the complicated connections in the society get represented by the elected data model. Note that relationships themselves can also have properties.

Indeed by considering values as separate items (stored once), the operations on the database in essence boils down on operations on the relationships. And if a value of a property needs a change, not the value get changed, but a pointing to another (or a new) value is performed (which enable storage of previous information and retrieval thereof). This also ensures that such change can become visible to all authorized connections at once.

The above embodiment has the advantages that it provides an ideal match between the defined (but extendable) requirements and the technical implementation in that the 'stored once' principle leads not only to data reduction (storage size reduction) per se, but ensures that the data in the values can serve as a trusted set of master data, with build-in by design consistency and/or privacy.

In a further embodiment one or more of the data fields are encrypted. In an exemplary embodiment thereon the encryption is applied to the values and/or the relationships in the graph based databases.

In summary one or more of the following features of the invention, which can be used separately or in combination are once more indicated below:
1. Public / Private / Upon Request
2. Active (dynamic) / Passive (static)
3. Opt IN & OUT
4. Privacy by design
5. Verified by different means (tool / connections / networked effect / ...)
6. Add manually / Request Confirmation (invite) / Request
7. Stored Once: match based on verified properties / suggestions

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

Alternatively formulated one can state that an embodiment of invention relates to a database for storing a plurality of individual or an organization information, said database being constructed in that data used therein is verified by design, meaning the operations, interfaces and underlying database set-up is made to realize this, in a preferred embodiment the database being a graph database.

In essence the database comprises for each of such individual or an organization a plurality of first data fields, each for storing a feature/property of such individual or organization (of which a part define the contact information thereof), whereby the database is based on a data model, wherein a difference is made between the feature/property of the user (individual, organization) who's data is to be stored and the value assigned thereto (as described in Figure 1 and 2), more specifically a data model/structure relating user to properties and a property to a value is elected, whereby user, property and value are a separate node in a graph and the relationship is then represented by the bridges between the nodes. Therefore the invention relates to methods for using/handling an target individual or an organization his/her or its information stored in such databases, based on search methods, using said bridges.

The invention provides technological solutions curing the above mentioned problems, more in particular a database structure or system design (subsequently implemented in software) and related use methods, build on a well selected underlying concept, the use thereof with a dedicated application, for supporting one or more of the indicated aspects of the invention (accessibility control, high quality data and/or smart entry), in particular by choice of the specific data model outlined above and/or the selection of a suitable technology solution in the field of databases, especially a graph based database.

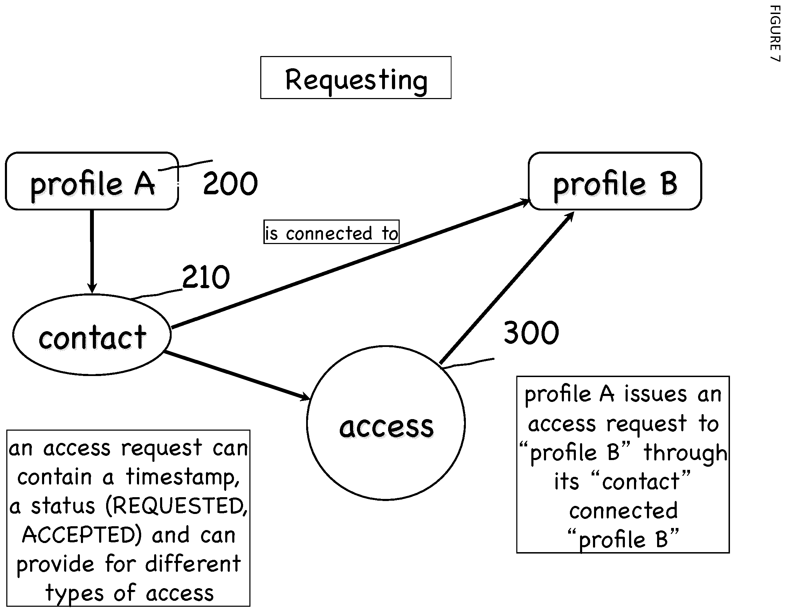

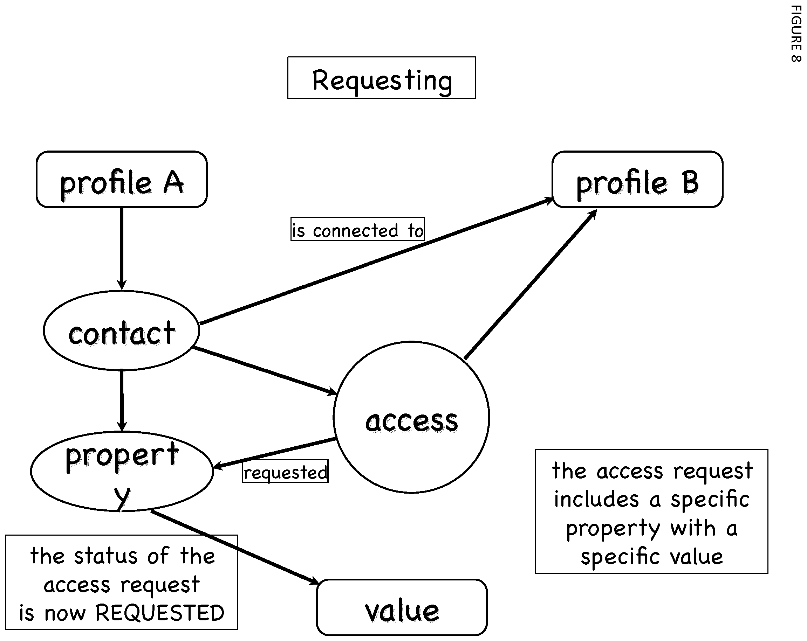

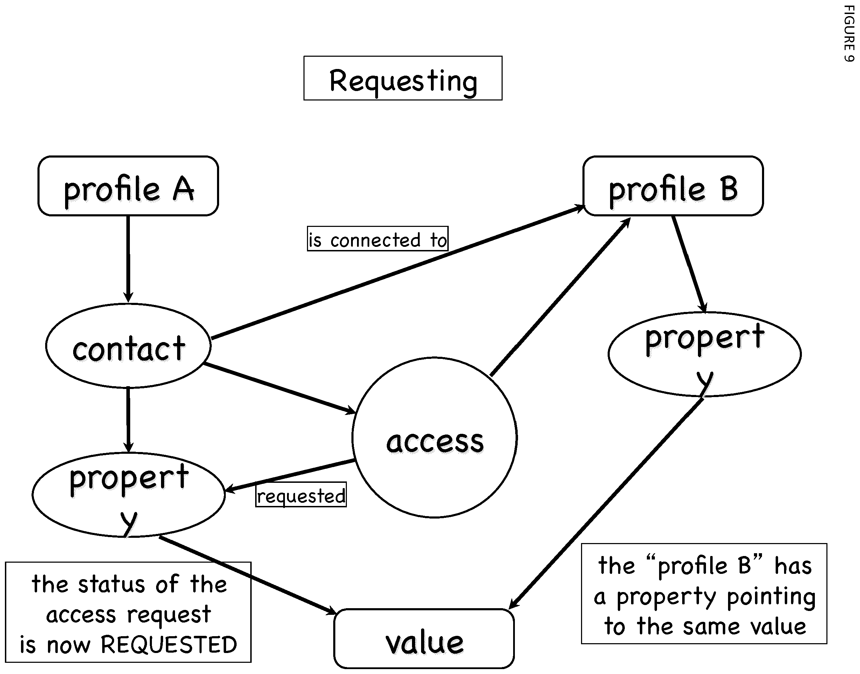

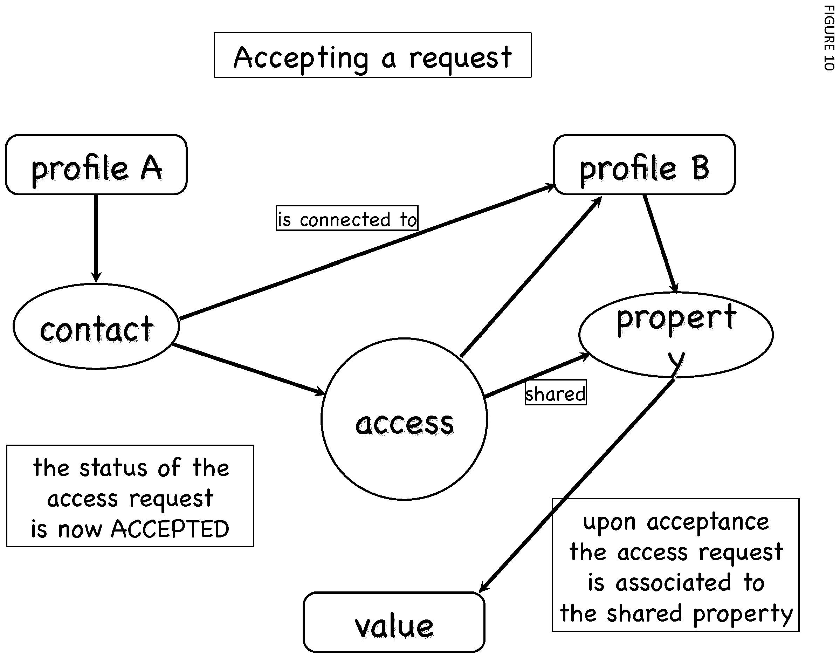

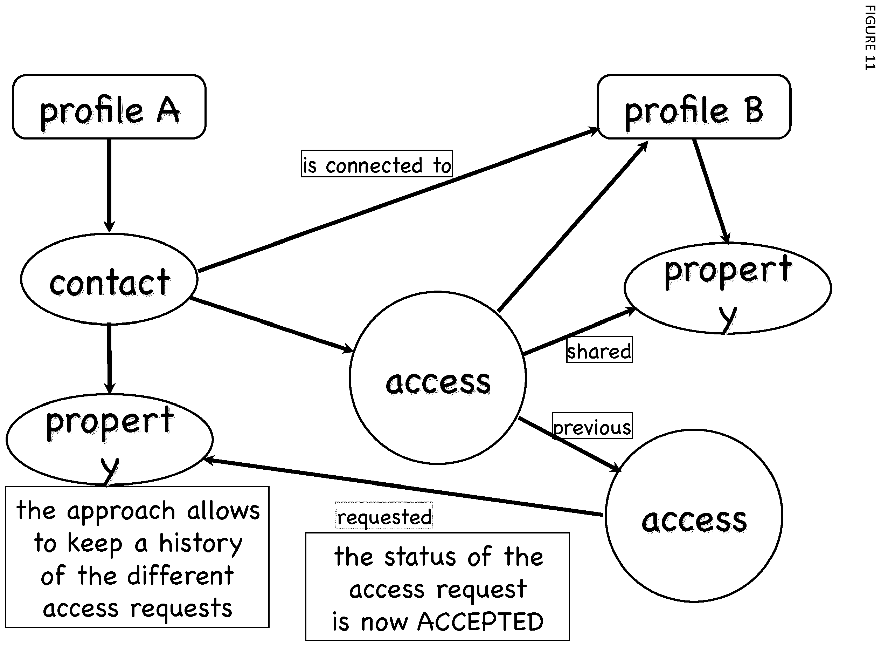

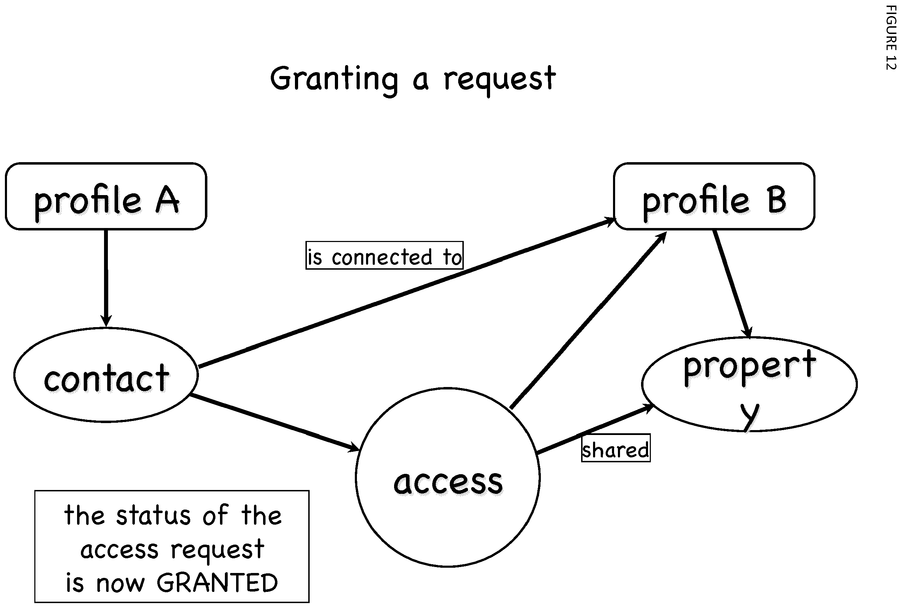

Ensuring that once can determine the accessibility (if any) for (a predefined classes of) third parties of feature value (the so-called privacy policy) is (as shown in Figure 6) by use of mechanisms related to the property (node), not the value referenced by it. Figure 7-12 demonstrate an exemplary embodiment thereof. In essence a specialized node (300) (called access request or alternatively to be called access management node) is used. In an embodiment thereon the node has a dual state (requested, granted) but alternative embodiments with more states are equally possible. This node is used in combination with the contact node defined earlier in particular a relationship between said contact node and said access management node is made. As the fine per property granularity allows, a request can be on a per feature or property basis. When a request is made (and corresponding property and value exist) and granted, instead of copying values (leading to the problems discussed above of maintenance) a link is made instead to the same value (as this property becomes denoted a shared property).

Whilst the principles of the invention have been set out above in connection with specific embodiments, it is to be understood that this description is merely made by way of example and not as a limitation of the scope of protection which is determined by the appended claims.Alternatively formulated the invention relates to a database system comprising: a graph based database, a query engine for performing queries to the graph based database; one or more applications operable for requesting and receiving data from the query engine; a memory for storing machine executable instructions for implementing the database system; anda processor for executing the machine executable instructions in support of the various methods supported by the database system and its linked applications.

## Claims

1. A database for storing a plurality of individual or an organization information, the database comprising for each of such individual or an organization a plurality of first data fields, each for storing a feature of such individual or organization of which a part define the contact information thereof; for at least a part of said first data fields, either individually or in group, at least one further second data field is provided, the database being **characterized in that** in said further second data field the individual or an organization can select or assign or relate or choose one or more attributes defining the by the individual or organization required communication method for determining the accessibility if any for a predefined classes of third parties, wherein said database is a graph database; and
wherein in said database individual or organization, properties of said individuals or organizations and values assigned to said properties are separate nodes in the graph and the relationships between individual or organization, properties of said individuals or organizations and values assigned to said properties are represented by bridges between said nodes.

2. The database of claim 1, wherein the individual or an organization can select for a feature that it may never be made accessible to a third party (private); or that it may always be made accessible to a third party (public).

3. The database of claim 1 or 2wherein the individual or an organization can select for a feature that it may be made accessible to a third party only if the third party belongs to the individual or an organizations (professional) network; or if the third party belongs to the individual or an organizations private network.

4. The use as (central) database of claim 1 by a plurality of applications.

5. A method of entering by an individual or an organization of his/her or its information in the database of claim 1, comprising: entering the features of the individual or organization in the data fields; and select for at least one of said features the second data field an attribute.

6. The method of claim 5, comprising the step of suggesting for one or more of the entered features a suggested alternative available from a second more trusted database; and upon confirmation of the individual or an organization store the suggested alternative in the data field.

7. A method for using an target individual or an organization his/her or its information stored in the database of claim 1 by another individual or organization, comprising the steps of: entering one or more data fields identifying the target individual; upon verification by the database confirmation that the target individual or an organization contact information is stored therein; starting a communication method, taking into account the attributes, stored in the database for the plurality of features of the target individual or an organization to get access to one or more of such features, optionally entering an approval or rejection thereof; or if upon verification by the database that the target individual or an organization contact information is not stored therein; automatically generating an invitation to the target individual to join. if said verification is successful.

8. A method of importing a database storing a plurality of target individual or an organization his/her or its information held by another individual or organization in the database of claim 1, comprising the step of executing the method of claim 8 on a per target individual or an organization basis.

9. A computer program product, operable on a processing engine, for executing any of the steps of the methods 7 to 8.

10. A non-transitory machine-readable storage medium storing the computer program product of claim 9.

11. A computer based system for handling communications invoked between individual or an organizations using the database of claim 1 while executing any of the methods 7-11, comprising storage means for the database of claim 1; and storage means for requests for access and approvals or rejections thereof.

12. The method of claim 7 wherein the step of joining either results in the use of the method of claim 7 and/or by confirming the entered data fields and setting the related second data field.

13. The method of claim 7 wherein using a target individual or an organization his/her or its information stored in the database of claim 1 by another individual, broadcasting individual or organization, comprising the steps of either:
- performing an analysis on the database and automatically generating suggestions to link; or
- providing a request to the target individual or organization on which channels to be used for providing the to be broadcasted information; and adapting in accordance with the response to such request the related second data field to provide only access to such features related to the agreed upon channels.

14. The method of claim 13, whereby the step of performing analysis is only performed on data verified with trusted databases.

15. A method of any of the preceding method claims, being based on graph based search methods, searching along the bridges of the graph.

## Patentansprüche

1. Datenbank zum Speichern einer Vielzahl von Informationen zu einer Person oder einer Organisation, wobei die Datenbank für jede Person oder Organisation eine Vielzahl von ersten Datenfeldern zum Speichern jeweils eines Merkmals dieser Person oder Organisation umfasst, von denen ein Teil die Kontaktinformationen derselben definiert; wobei für mindestens einen Teil der ersten Datenfelder, entweder einzeln oder in der Gruppe, mindestens ein weiteres zweites Datenfeld vorgesehen ist, wobei die Datenbank **dadurch gekennzeichnet ist, dass** in dem weiteren zweiten Datenfeld die Person oder eine Organisation ein oder mehrere Attribute auswählen oder zuweisen oder in Beziehung setzen oder auswählen kann, die das von der Person oder Organisation benötigte Kommunikationsverfahren zum Bestimmen der Zugänglichkeit, falls vorhanden, für eine vordefinierte Klasse von Dritten definieren, wobei die Datenbank eine Graphendatenbank ist; und wobei in der Datenbank die Person oder Organisation, die Merkmale der Personen oder Organisationen und die den Merkmalen zugeordneten Werte separate Knoten in dem Graphen sind und die Beziehungen zwischen der Person oder Organisation, die Merkmale der Personen oder Organisationen und die den Merkmalen zugeordneten Werte durch Brücken zwischen den Knoten dargestellt werden.

2. Datenbank nach Anspruch 1, wobei die Person oder eine Organisation für ein Merkmal auswählen kann, dass dieses niemals einem Dritten zugänglich gemacht wird (privat); oder dass es immer einem Dritten zugänglich gemacht wird (öffentlich).

3. Datenbank nach Anspruch 1 oder 2, wobei die Person oder eine Organisation für ein Merkmal auswählen kann, dass dieses nur dann einem Dritten zugänglich gemacht wird, wenn der Dritte dem (beruflichen) Netzwerk der Person oder einer Organisation angehört; oder wenn der Dritte dem privaten Netzwerk der Person oder einer Organisation angehört.

4. Verwendung als (zentrale) Datenbank nach Anspruch 1 durch eine Vielzahl von Anmeldungen.

5. Verfahren zum Eingeben, durch eine Person oder eine Organisation, ihrer/seiner Informationen in die Datenbank nach Anspruch 1, umfassend: Eingeben der Merkmale der Person oder Organisation in die Datenfelder; und Auswählen eines Attributs für mindestens eines der genannten Merkmale des zweiten Datenfeldes.

6. Verfahren nach Anspruch 5, umfassend den Schritt des Vorschlagens für eines oder mehrere der eingegebenen Merkmale einer vorgeschlagenen Alternative, die aus einer zweiten, vertrauenswürdigeren Datenbank verfügbar ist; und nach Bestätigung durch die Person oder eine Organisation die Speicherung der vorgeschlagenen Alternative in dem Datenfeld.

7. Verfahren zum Verwenden einer Zielperson oder einer Organisation ihrer/seiner in der Datenbank nach Anspruch 1 gespeicherten Informationen durch eine andere Person oder Organisation, umfassend die folgenden Schritte: Eingeben eines oder mehrerer Datenfelder, welche die Zielperson identifizieren; bei Überprüfung durch die Datenbank bestätigen, dass die Kontaktinformationen der Zielperson oder einer Organisation darin gespeichert sind; Starten eines Kommunikationsverfahrens, unter Berücksichtigung der Attribute, die in der Datenbank für die Vielzahl von Merkmalen der Zielperson oder einer Organisation gespeichert sind, um Zugang zu einem oder mehreren dieser Merkmale zu erhalten, optionales Eingeben einer Zustimmung oder Ablehnung davon; oder wenn bei Überprüfung durch die Datenbank, dass die Kontaktinformationen der Zielperson oder einer Organisation nicht darin gespeichert sind; automatisches Erzeugen einer Einladung an die Zielperson zum Beitreten, wenn die Überprüfung erfolgreich ist.

8. Verfahren zum Importieren einer Datenbank, in der eine Vielzahl von Zielpersonen oder eine Organisation ihre/seine Informationen speichert, die durch eine andere Person oder Organisation in der Datenbank nach Anspruch 1 gehalten werden, umfassend den Schritt des Ausführens des Verfahrens nach Anspruch 8 auf Basis einer Zielperson oder einer Organisation.

9. Computerprogrammprodukt, das auf einer Verarbeitungsmaschine betrieben werden kann, um einen der Schritte der Verfahren 7 bis 8 auszuführen.

10. Nicht-vorübergehendes maschinenlesbares Speichermedium, welches das Computerprogrammprodukt nach Anspruch 9 speichert.

11. Computergestütztes System zur Handhabung von Kommunikationen, die zwischen einer Person oder einer Organisation unter Verwendung der Datenbank nach Anspruch 1 während des Ausführens eines der Verfahren 7-11 aufgerufen werden, umfassend Speichermittel für die Datenbank nach Anspruch 1; und Speichermittel für Anfragen nach Zugang und Genehmigungen oder Ablehnungen davon.

12. Verfahren nach Anspruch 7, wobei der Schritt des Verbindens entweder in der Verwendung des Verfahrens nach Anspruch 7 resultiert und/oder durch Bestätigen der eingegebenen Datenfelder und Festlegen des zugehörigen zweiten Datenfeldes.

13. Verfahren nach Anspruch 7, wobei unter Verwendung einer Zielperson oder einer Organisation ihre/seine in der Datenbank nach Anspruch 1 gespeicherte Information durch eine andere Person, sendende Person oder Organisation verwendet wird, umfassend die Schritte:
- Durchführen einer Analyse auf die Datenbank und automatisches Generieren von Vorschlägen zur Verknüpfung; oder
- Bereitstellen einer Anfrage an die Zielperson oder Organisation, auf welchen Kanälen die zu sendenden Informationen bereitgestellt werden sollen; und Anpassen des zugehörigen zweiten Datenfeldes in Übereinstimmung mit der Antwort auf eine solche Anfrage, um nur Zugang zu solchen Merkmalen zu gewähren, die sich auf die vereinbarten Kanäle beziehen.

14. Verfahren nach Anspruch 13, wobei der Schritt des Durchführens der Analyse nur auf Daten durchgeführt wird, die mit vertrauenswürdigen Datenbanken überprüft wurden.

15. Verfahren nach einem der vorhergehenden Verfahrensansprüche, die sich auf graphenbasierte Suchverfahren stützen, wobei entlang der Brücken des Graphen gesucht wird.

## Revendications

1. Base de données pour stocker une pluralité d'informations relatives à un individu ou à une organisation, la base de données comprenant pour chacun de ces individus ou organisations une pluralité de premiers champs de données, chacun pour stocker une caractéristique de cet individu ou de cette organisation dont une partie définit les coordonnées de celui-ci/celle-ci ; pour au moins une partie desdits premiers champs de données, soit individuellement soit en groupe, au moins un second champ de données supplémentaire est fourni, la base de données étant **caractérisée en ce que**, dans ledit second champ de données supplémentaire, l'individu ou une organisation peut sélectionner ou attribuer ou relier ou choisir un ou plusieurs attributs définissant la méthode de communication requise par l'individu ou l'organisation pour déterminer l'accessibilité s'il y en a pour une classe prédéfinie de tierces parties, dans laquelle ladite base de données est une base de données graphique ; et dans laquelle, dans ladite base de données, des propriétés d'individu ou d'organisation desdit(e)s individus ou organisations et des valeurs attribuées auxdites propriétés sont des nœuds distincts dans le graphique et les relations entre des propriétés d'individu ou d'organisation desdit(e)s individus ou organisations et des valeurs attribuées auxdites propriétés sont représentées par des ponts entre lesdits nœuds.

2. Base de données selon la revendication 1, dans laquelle l'individu ou une organisation peut sélectionner pour une caractéristique qu'elle ne peut jamais être rendue accessible à une tierce partie (privée) ; ou qu'elle peut toujours être rendue accessible à une tierce partie (publique).

3. Base de données selon la revendication 1 ou 2, dans laquelle l'individu ou une organisation peut sélectionner pour une caractéristique qu'elle peut être rendue accessible à une tierce partie uniquement si la tierce partie appartient au réseau (professionnel) de l'individu ou d'une organisation ; ou si la tierce partie appartient au réseau privé de l'individu ou d'une organisation.

4. Utilisation comme base de données (centrale) selon la revendication 1 par une pluralité d'applications.

5. Procédé de saisie par un individu ou une organisation de ses informations dans la base de données selon la revendication 1, comprenant : la saisie des caractéristiques de l'individu ou de l'organisation dans les champs de données ; et la sélection pour au moins une desdites caractéristiques du second champ de données d'un attribut.

6. Procédé selon la revendication 5, comprenant l'étape consistant à suggérer, pour une ou plusieurs des caractéristiques saisies, une alternative suggérée disponible à partir d'une seconde base de données plus fiable; et lors de la confirmation de l'individu ou d'une organisation, stocker l'alternative suggérée dans le champ de données.

7. Procédé d'utilisation des informations d'un individu cible ou d'une organisation stockées dans la base de données selon la revendication 1 par un autre individu ou une autre organisation, comprenant les étapes consistant à : saisir un ou plusieurs champs de données identifiant l'individu cible ; lors de la vérification par la base de données, confirmer que les coordonnées de l'individu cible ou d'une organisation sont stockées dans celle-ci ; démarrer une méthode de communication, en tenant compte des attributs, stockés dans la base de données pour la pluralité de caractéristiques de l'individu cible ou d'une organisation pour accéder à une ou plusieurs de ces caractéristiques, en saisissant facultativement une approbation ou un rejet de celle-ci ; ou lors de la vérification par la base de données que les coordonnées de l'individu cible ou d'une organisation ne sont pas stockées dans celle-ci ; générer automatiquement une invitation, destinée à l'individu cible, à rejoindre si ladite vérification est réussie.

8. Procédé d'importation d'une base de données stockant une pluralité d'informations d'individu cible ou d'une organisation détenues par un autre individu ou une autre organisation dans la base de données selon la revendication 1, comprenant l'étape consistant à exécuter le procédé selon la revendication 8 sur la base d'un individu cible ou d'une organisation.

9. Produit de programme informatique, utilisable sur un moteur de traitement, pour exécuter l'une quelconque des étapes des procédés 7 à 8.

10. Support de stockage non transitoire lisible par machine stockant le produit de programme informatique selon la revendication 9.

11. Système informatique de traitement de communications invoquées entre un individu ou une organisation utilisant la base de données selon la revendication 1, lors de l'exécution de l'un quelconque des procédés 7 à 11, comprenant un moyen de stockage pour la base de données selon la revendication 1; et un moyen de stockage pour des demandes d'accès et des approbations ou des rejets de celles-ci.

12. Procédé selon la revendication 7 dans lequel l'étape de jonction entraîne l'utilisation du procédé selon la revendication 7 et/ou la confirmation des champs de données saisis et la définition du second champ de données associé.

13. Procédé selon la revendication 7 dans lequel, en utilisant les informations d'un individu cible ou d'une organisation stockées dans la base de données selon la revendication 1 par un autre individu, individu de radiodiffusion ou organisation de radiodiffusion, comprenant les étapes consistant à :
- effectuer une analyse sur la base de données et générer automatiquement des suggestions de liaison ; ou
- fournir une demande à l'individu cible ou à l'organisation sur laquelle des canaux à utiliser pour fournir les informations à diffuser ; et adapter conformément à la réponse à cette demande le second champ de données associé pour fournir uniquement l'accès à ces caractéristiques liées aux canaux convenus.

14. Procédé selon la revendication 13, selon lequel l'étape consistant à effectuer une analyse n'est effectuée que sur des données vérifiées avec des bases de données fiables.

15. Procédé selon l'une quelconque des revendications de procédé précédentes, étant basé sur des procédés de recherche basés sur un graphique, recherchant le long des ponts du graphique.
